(19) Europäisches Patentamt
European Patent Office
Office européen des brevets

(11) Publication number: **0 243 501 A1**

(12) # EUROPEAN PATENT APPLICATION

published in accordance with Art. 158(3) EPC

(21) Application number: 86902901.7

(22) Date of filing: 01.05.86

Data of the international application taken as a basis:

(86) International application number: PCT/JP86/00225

(87) International publication number: WO87/02681 (07.05.87 87/10)

(51) Int.Cl.[3]: C 08 G 75/02
G 11 B 11/00, B 29 C 45/00
B 32 B 27/28

(30) Priority: 30.10.85 JP 243268/85
12.11.85 JP 2531/86
13.03.86 JP 55355/86
14.03.86 JP 56359/86
14.03.86 JP 56360/86
14.03.86 JP 56362/86

(43) Date of publication of application: 04.11.87 Bulletin 87/45

(84) Designated Contracting States: DE FR GB

(71) Applicant: SHOWA DENKO K.K.
13-9, Shiba Daimon 1-chome
Minato-ku, Tokyo 105(JP)

(72) Inventor: SAEDA, Shigeru
35-10, Kamiuma 5-chome
Setagaya-ku Tokyo 154(JP)

(72) Inventor: YOSHIDA, Haruo
S-19-308, Akeno Kitamachi
Ohita-shi Ohita 870-01(JP)

(72) Inventor: NINAGAWA, Jinichi
2-3209-913, Shiomidai 3-chome
Isogo-ku, Yokohama-shi Kanagawa 235(JP)

(72) Inventor: ENDO, Yoshikazu
4-8-401, Higashiyaguchi 1-chome
Ohta-ku Tokyo 146(JP)

(72) Inventor: WASHIYAMA, Junichiro
16-1-122, Irie 1-chome Kanagawa-ku
Yokohama-shi Kanagawa 221(JP)

(72) Inventor: MINORIKAWA, Naoki
2-20, Sakuramoto 1-chome Kawasaki-ku
Kawasaki-shi Kanagawa 210(JP)

(74) Representative: Dealtry, Brian et al,
Eric Potter & Clarkson 14, Oxford Street
Nottingham NG1 5BP(GB)

(54) **CURABLE COMPOSITION AND METHOD FOR MOLDING IT.**

(57) A curable composition comprising a compound having at least an unsaturated cycloacetal group represented by formula (I) (unsaturated dioxane type) or formula (II) (unsaturated dioxolane type), a compound having at least two SH groups per molecule, and a compound having at least two reactive unsaturated bonds and being selected from the group consisting of bisphenols, triazine ring-containing compounds, and isocyanuric acid derivatives, and a method for injection molding of the composition are disclosed. The curable composition undergoes polymerization by crosslinking reaction caused by irradiation with high energy rays, and the resulting molding having formed thereon an aluminum oxide layer can be used as an optical disc base having high optical reliability, and excellent mechanical strength, water resistance, heat resistance and hardness.

./...

EP 0 243 501 A1

FIG.1

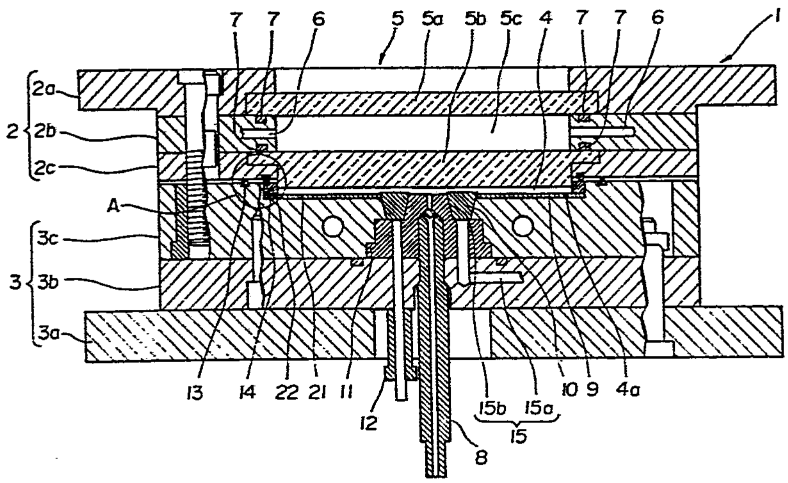

7
7
6
5
5a
5b
5c
4
7
7
6
1
2a
2
2b
2c
A
3c
3
3b
3a
13
14
22
21
11
12
8
15b
15a
15
10
9
4a

TITLE MODIFIED
see front page

SPECIFICATION

# CURABLE COMPOSITION AND PROCESS FOR MOLDING THE SAME

## Field of the Invention

The present invention relates to a curable composition which may be conveniently used to manufacture an information memory disc or for like applications, and particularly to a curable composition which may be adapted for use as a material for a substrate of a photo-disc, such as video disc, audio disc and photo-memory disc, for recording and reproducing image and audio informations thereon using light beams as the media.

## Background of the Invention

Photo-memory discs have been eagerly investigated and developed to be used for practical applications with the spread of compact discs and video discs. It is expected to use the photo-memory disc as a back-up memory for a computer in lieu of the magnetic disc and flopy disc, since the photo-memory disc has a large recording capacity in the order of giga-bits and it can be handled easily. It is estimated that the photo-memory disc has a prolonged life-time, since the informations can be recorded thereon and reproduced therefrom by a non-contact system. It is important that the substrate for the photo-memory disc used

for the recording and reproduction of the informations should be transparent and uniform and made of an extremely stable material.

In consideration of the balance of the cost and the physical properties, polymethyl mathacrylate resins (PMMA) and polycarbonate resins have predominantly used as the materials for the substrate of such photo-memory discs in the past. However, the substrate made of PMMA has the disadvantages that the heat resistance thereof is unsatisfactory and that it is high in moisture absorption leading to large dimensional change upon absorption of moisture.

The substrate made of polycarbonate resin has poor moldability, and there is a tendency that the molecules are oriented during the molding step to give a molded product which exhibits a·. birefringence. In addition, the polycarbonate substrate is poor in heat resistant property not to withstand repeated irradiation with writing laser beams. Furthermore, the polycarbonate substrate of optical grade is molded from a polycarbonate which has a small molecular weight for improving the fluidity thereof at the molding step. As the results, the molded polycarbonate substrate has poor water-proof property, and the impact strength and the surface hardness thereof are lowered.

An object of this invention is to provide a curable composition for molding a product which is

transprent and has little tendency of birefringence.

Another object of this invention is to provide a curable composition for molding a product which is improved in heat resistance and surface hardness and decreased in water absorption.

A further object of this invention is to provide a curable composition for molding a product which may be used as a substrate for photo-memory disc.

A further object of this invention is to provide an efficient process for molding a disc substrate from the curable composition of this invention.

The curable composition, which may be used to attain the aforementioned objects of this invention, comprises a compound having at least two unsaturated cycloacetal groups per one molecule (hereinafter referred to briefly as "acetal compound"), a compound having at least two mercapto groups per one molecule (hereinafter referred to bliefly as "mercapto compound").

The curable composition further provided in accordance with this invention comprises a Component A which is a compound having at least two unsaturated cycloacetal groups per one molecule, a Component B which is a compound having at least two mercapto groups per one molecule, and a Component C which is a compound selected from the group consisting of bisphenols each having at least two acryloyl and/or methacryloyl groups per one molecule, compounds

each having a triazine ring and derivatives of isocyanuric acid.

The curable composition further provided in accordance with this invention comprises a Component A which is a compound having at least two unsaturated cycloacetal groups per one molecule, a Component B which is a compound having at least two mercapto groups per one molecule, a Component C which is a compound selected from the group consisting of bisphenols each having at least two acryloyl and/or methacryloyl groups per one molecule, compounds each having a triazine ring and derivatives of isocyanuric acid, and a Component D which is selected from the group consisting of silicon compounds each having at least one mercapto grous per one molecule, ester compounds prepared by reacting straight-chain or side-chain alcohols each having not less than four carbon atoms with carboxylic acids each having at least one mercapto group per one molecule, and alkyl groups each having at least two acryloyl and/or methacryloyl groups per one molecule and substituted products thereof having substituting halogen groups.

The present invention further provides a transparent substrate comprising an aluminium oxide layer formed on the surface of a molded product prepared by curing a composition including a Component A which is a compound having at least two unsaturated cycloacetal groups per one molecule and a Component B which is a compound having at

least two mercapto groups per one molecule; and a transparent substrate comprising an aluminium oxide layer formed on the surface of a molded product prepared by curing a composition including a Component A which is a compound having at least two unsaturated cycloacetal groups per one molecule, a Component B which is a compound having at least two mercapto groups per one molecule, and a Component C which is selected from the group consisting of bisphenols each having at least two acryloyl and/or methacryloyl groups per one molecule, compounds each having a triazine ring and derivatives of isocyanuric acid.

The present invention also resides in a process for molding a curable resin comprising the steps of evacuating the cavity in a mold having at least a portion forming a window extending from the outside of the mold to the cavity and made of a material which transmits a high energy beam, injecting a curable composition comprised of the aforementioned cross-linkable Components A, B and C or the aforementioned cross-linkable Components A, B, C and D into the cavity, and irradiating the injected resinous composition with a high energy beam from the outside of the mold through said window to cure said resinous composition. The present invention further resides in a process for molding a curable resin comprising the steps of injecting a curable resin into a cavity in a mold having at least a portion made of a material which transmits a high eneregy

beam, and irradiating the curable resin with a high eneregy beam while moving at least a portion of the mold to contract the cavity during the step of irradiation with the high eneregy beam.

## Disclosure of the Invention

The curable composition according to this invention will now be described in detail.

Acetal Compound:

The first component, i.e. the acetal compound (Component A) of the curable composition of this invention is an unsaturated cycloacetal compound having at least two unsaturated cycloacetal groups per one molecule, the unsaturated cycloacetal group being represented either one of the following formulae of:

Unsaturated dioxane type: 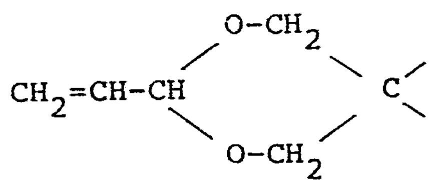 ; or

Unsaturated dioxolane type: 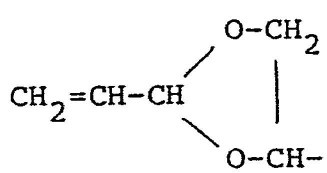

Examples of the acetal compound which may be preferably used in the curable composition of this invention include the compounds listed in the following paragraphs (i) to (iv).

(i) Diallylidene pentaerythritol, triallylidene

sorbitol, diallylidene-2,2,6,6-tetramethylol cyclohexanone, and mixtures thereof.

(ii) Reaction products of monoallylidene trimethylolpropane and/or monoallylidene trimethylolethane with an isocyanate compound such as tolylenediisocyanate, polyalkyleneallylisocyanate, methaphenylenediisocyanate, xylylenediisocyanate, hexamethylenediisocyanate and isophoronediisocyanate.

(iii) Esterified products of monoallylidene trimethylolpropane and/or monoallylidene trimethylolethane with an acid anhydride such as succinic anhydride, maleic anhydride, itaconic anhydride, phthalic anhydride, tetrahydrophthalic anhydride and hexahydrophthalic anhydride.

(iv) Compounds prepared by reacting esterified products of monoallylidene trimethylolpropane and/or monoallylidene trimethylolethane esterified by an acid anhydride with an epoxy compound such as a polyfunctional glycidyl ether type epoxy compound or a glycidyl ester type epoxy compound derived from phthalic acid or adipic acid.

Mercapto Compound Used as the Component B:

The mercapto compound which is used as the second component of the curable composition of this invention is an aliphatic or aromatic polymercaptan having at least two mercapto groups per one molecule.

Examples of the mercapto compound which may be

used in the composition of this invention include those listed in the following paragraphs (i) to (v).

(i) Dipentenedimercaptan, ethylhexyldimercaptan, 1,6-hexanedimercaptan.

(ii) Ester compounds prepared by reacting mercapto compounds having carboxyl groups with polyhydric alcohols. Examples of mercapto compound having a carboxyl group include thioglycollic acid, β-mercaptopropionic acid and mercaptosuccinic acid. Examples of polyhydric alcohol include pentaerythritol, dipentaerythritol, trimethylolpropane and trimethylolethane.

(iii) Compounds each having a hydrogen group on the carbon atom at the β-position relative to the mercapto group.

(iv) Compounds prepared by reacting epoxy resins with hydrogen sulfide.

(v) Compounds prepared by reacting epoxy resins with thioglycollic acid.

Compound Having Reactive Unsaturated Groups and Used as the Component C:

The Compound (C) having reactive unsaturated bonds and used as the third component in a preferred embodiment of the curable composition of this invention is a compound having at least two reactive unsaturated groups per one molecule, and may be any of a variety of compounds as far as it is copolymerizable with and uniformly mixed with the

aforementioned acetal compound (A) and the mercapto compound (B).

Examples of such compounds are bisphenols (C-1), triazine compounds (C-2), derivatives of isocyanuric acid (C-3) and other compounds (C-4). Amongst these compounds, bisphenols (C-1), triazine compounds (C-2) and derivatives of isocyanuric acid (C-3) are effective since they improve the heat resistance of the curable composition to which they are added.

These compounds will now be described hereinbelow.

Bisphenols (C-1):

Bisphenols (C-1) which may be preferably used as the third component having reactive unsaturated bonds in the present invention are bisphenols each having at least two acryloyl and/or methacryloyl groups per one molecule.

The bisphenols (C-1) which may be preferably used in the composition of this invention have the structures represented by the following general formula (1) of:

$(R_1)_{n_1}-X-(R_2)_{n_2}$ ----- (1)

wherein $n_1$ and $n_2$ are integers of from 1 to 3, and X is a group reperesented by the following structural formulae of:

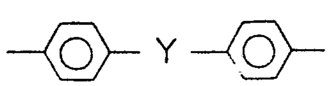 ,

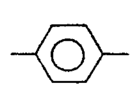 ,

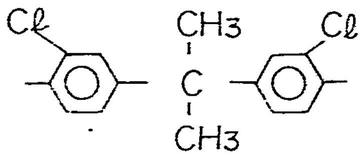 , 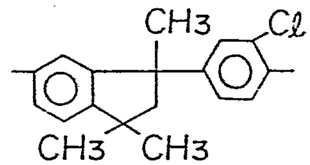 ,

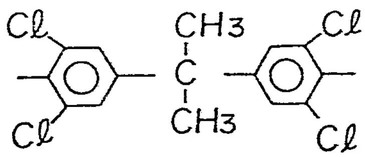 , 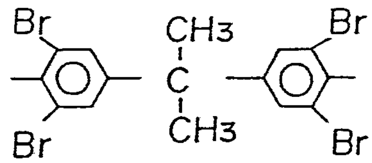 ,

wherein Y is a group represented by the following structural formulae of:

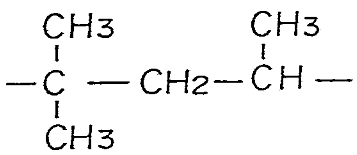 , $-CH_2-$ , 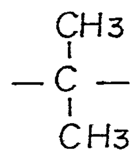 ,

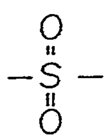 , 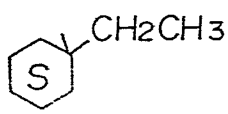 , 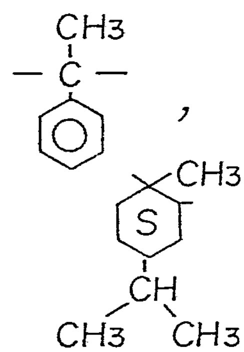 ,

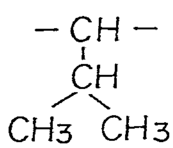 , 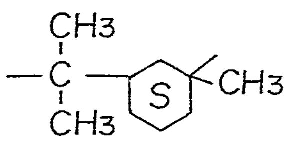 ,

The groups $R_1$ and $R_2$ have the structures represented by the following genral formula of:

$$-(-O-\underset{\displaystyle R_3}{\underset{|}{CH}}-CH_2)_m-O-\underset{\displaystyle O}{\underset{\|}{C}}-\overset{\displaystyle R_4}{\overset{|}{C}}=CH_2$$

wherein $R_3$ and $R_4$ each stands for hydrogen, methyl, ethyl or substututed groups thereof substituted with halogen atoms; and $\underline{m}$ is an integer of 0 to 6.

Each of the aforementioned compounds may be used singly or in combination with one or more other compounds.

Triazine Compound (C-2):

The triazine compound (C-2) which may be preferably used in the composition of this invention is a compound having at least one triazine ring and at least two acryloyl and/or methacryloyl groups per one molecule and being represented by the general formula (2), or an oligomer thereof which is linked by formalin, a polyhydric alcohol or ethylene oxide.

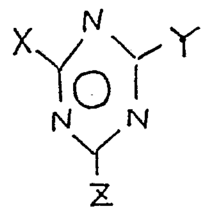

----- (2)

wherein X, Y and Z each stands for hydrogen, an alkyl group, an alkoxy group or a modified alkoxy group modified with mathacrylic acid or acrylic acid, or a group represented by $-N\begin{matrix} CH_2-OR_5 \\ CH_2-OR_6 \end{matrix}$ (wherein $R_5$ and $R_6$ each stands for hydrogen, an aliphatic alkyl group such as methyl, ethyl or propyl, benzyl group or a group represented by $-(CH_2-CH_2-O-)_n-CO-\underset{X'}{C}=CH_2$ where $\underline{n}$ = 0 to 4 and X' is hydrogen or an alkyl group).

Typical examples of the triazine compound (C-2)

are as follows.

(1) N, N'-bis(meth)acryloyloxymethyl-N,N',N",N"-tetrakis-methoxymethylmelanine

N,N',N",N"-tetrakis(meth)acloyloxymethyl-N',N"'-bisethoxymethylmelamine

(2) N,N,N',N',N",N"-hexakis(2-(meth)acryloylethoxyoxy-methyl)melamine

(3) 2,4-bis((N,N-bis(2-(2-(meth)acryloyloxyethoxy)ethoxymethyl))amino)-6-ethoxy-1,3-5-triazine

(4) 2,4-bis(p-(2-(meth)acryloyloxyethoxy)phenyloxy)-6-(N,N-bis(2-(2-(meth)acryloyloxyethoxy)ethoxymethyl))amino)-1,3,5-triazine

(5) 2,2-bis(N,N',N"-trismethoxymethyl-N',N"-(2-(meth)-acryloyloxyethoxy)methyl)melamyloxy)phenyl)propane

Examples of polyhydric alcohols which may be used in origomerization are ethylene glycol, diethylene glycol, propylene glycol, 1,3-butanediol, 1,6-hexanediol, hydrogenated bisphenol-A, trimethylolpropane, pentaerythritol, ethylene oxide adducts of phthalic acid, isophthalic acid and terephthalic acid.

It suffices that each molecule has two or more functional groups per one triazine ring, and it is desirable that 4 to 6 functional groups per one intramolecular triazine ring are included in consideration of the balance between the water-absorbing effect due to the formation of ester bonds and the improvement in heat resistance due to

increase in cross-linking bonds.

Derivatives of Isocyanuric Acid (C-3):

Derivatives of isocyanuric acid which may be preferably used as the third component of the curable composition of this invention as the compounds having reactive unsaturated bonds are the derivatives of isocyanuric acid each having at least two acryloyl and/or methacryloyl groups per one molecule.

Such derivatives of isocyanuric acid may be prepared as follows.

(1) Adducts of isocyanuric acid added with ethylene oxide or propylene oxide are reacted with acrylic acid and/or methacrylic acid.

(2) Isocyanuric acid is added with epichlorohydrin and then hydrogen chloride is removed from the adduct. The thus obtained product is reacted with a polyhydric alcohol, such as ethylene glycol, propylene glycol or glycerin, and then reacted with acrylic acid and/or methacrylic acid.

(3) Isocyanuric acid is reacted with ethylenechlorohydrin and allyl chloride, and the thus obtained reaction product is reacted with acrylic acid and/or methacrylic acid.

(4) Isocyanuric acid is added with ethylene oxide to obtain an adduct which is reacted with glycidyl acrylate and/or glycidyl methacrylate.

(5) Isocyanuric acid is reacted with chloroacetoamide,

and then reacted with formalin to introduce methylol groups which are reacted with acrylic acid and/or methacrylic acid.

(6) The reaction product of isocyanuric acid and acrylamide is oxymethylated and the thus obtained oxymethylation product is reacted with acrylic acid and/or methacrylic acid.

(7) A portion of acryloyl or methacryloyl groups of any of the reaction products set forth in (1) to (6) is substituted by saturated acyl groups to obtain aimed compounds.

Any of the compounds set forth above may be used singly or in combination.

Typical examples of derivatives of isocyanuric acid will be set forth hereinbelow.

Tris(2-acryloyloxyethyl) isocyanurate;

Tris(2-methacryloyloxyethyl) isocyanurate;

Di(2-acryloyloxyethyl)-2-hydroxyethyl isocyanurate;

Di(2-methacryloyloxyethyl)-2-hydroxyethyl isocyanurate;

Di(2-acryloyloxyethyl)-2-acetoxyethyl isocyanurate;

Di(2-methacryloyloxyethyl)-2-acetoxyethyl isocyanurate;

Di(2-acryloyloxyethyl)-allyl isocyanurate;

Di(2-methacryloyloxyethyl)-allyl isocyanurate.

It suffices that the compound has two or more acryloyl and/or methacryloyl groups per one molecule.

The following compounds are the examples of the compound having reactive unsaturated bonds, which may be

used as the third component in this invention.

1. Acryloyl or methacryloyl compounds, the specific examples being:

Ethyleneglycol di(meth)acrylate;
Diethyleneglycol di(meth)acrylate;
Triethyleneglycol di(meth)acrylate;
Polyethyleneglycol di(meth)acrylate;
Propyleneglycol di(meth)acrylate;
Polypropyleneglycol di(meth)acrylate;
Butyleneglycol di(meth)acrylate;
Trimethylolpropane tri(meth)acrylate;
Pentaerythritol tri(meth)acrylate;
Diglycidylbisphenol-A di(meth)acrylate;
Pentaerythritol tetramethacrylate; and
Bisphenol-A epoxydimethacrylate.

2. Vinyl compounds such as divinylbenzene and divinyl adipate.

3. Diallyl phthalate;
Diallyl succinate;
Diallyl adipate;
Triallyl isocyanurate;
diglycolbisallyl carbonate;
Diallyl maleate; and
Diallyl fumarate

The curable composition of this invention may be added with various other additives, if necessary. Examples

of optional additives are initiators, photo-sensitizers, antioxidants, thermal stabilizers, releasing agents, dyes, antistatic agents, blurring prevention agents, surface active agents, lebelling agents, polymerization modulators and ultraviolet ray absorbing agents.

The mixing ratio of the components will now be described.

It is desirous that the equivalent ratio of acetal compound (A) to mercapto compound should be in the range of 1 : 1 to 0.5. If the mixing ratio of acetal compound (A) is too large, the time required for curing is prolonged and there arises the tendency that an uneven molded product is formed. When the mixing ratio of mercapto compound (B) is extremely large, the resultant molded product has an unpleasant ordor or the properties of the molded product are deteriorated, for example, the hardness thereof is lowered. In order to obtain a curable resin composition, the sum of the number of unsaturated cycloacetal groups contained in one molecule of the acetal compound (A) and the number of mercapto groups contained in one molecule of the mercapto compound (B) should be not less than 4, preferably not less than 5.

If the mixing ratio of the third component (C) having reactive unsaturated bonds relative to the acetal compound (A) and the mercapto compound (B) is too large, the hardness of the resultant molded product becomes too high so

that the molded product becomes brittle. On the contrary, if the content of the third component is too small, the heat resistance of the molded product cannot reach the desired lebel. For these reasons, it is desirous that 0.2 to 6.3 equivalents, more preferably 0.5 to 5.4 equivalents, of component (C) are used per one equivalent of acetal compound (A).

When a bisphenol system compound is used as the third component having unsaturated bonds, it is desirous that the mixing ratio, in equivalent ratio, of acetal compound (A) : mercapto compound (B) : bisphenol system compound (C-1) is in the range of 1 : 0.25 to 1.5 : 0.1 to 10. If the mixed amount of bisphenol system compound (C-1) is too small, the resultant molded product has poor heat resistance so that it tends to be warped during the step of forming a substrate for recording medium. On the contrary, if the amount of bisphenol system compound (C-1) is too large, the cured product becomes brittle. On the other hand, when a triazine compound (C-2) is used in an excess mixing ratio, the hardness of the resultant molded product becomes too high leading to the result that the molded product becomes brittle. On the contrary, if the amount of the triazine compound is too small, the heat resistance of the resultant molded product cannot reach the desired lebel. It is desirous that 0.2 to 6.3 parts by weight of triazine compound (C-2) is used per one equivalent of the acetal

compound (A).

If a derivative of isocyanuric acid (C-3) is used in an excess mixing ratio, the resultant molded product becomes too high in hardness and becomes brittle. On the contrary, if the mixing ratio thereof is too small, the heat resistance of the resultant molded product cannot reach the desired lebel. Accordingly, it is desirous that 0.2 to 6.3 parts by weight of a derivative of isocyanuric acid (C-3) is used per one equivalent of the acetal compound (A).

As described hereinbefore, a reactive unsaturated compound may be added to the curable composition of the invention to lower the viscosity of the mixture for the improvement of workability and to facilitate complete curing of the molded product. An example of such additive is ethyleneglycol diacrylate. Not more than 4 equivalents, preferably about 0.1 to 4 equivalents, of a reactive unsaturated compound may be added to one equivalent of the mixture of the acetal compound (A), the mercapto compound (B) and the compound (C) having reactive unsaturated bonds. If the added amount of reactive unsaturated compound is too large, the resultant molded product becomes brittle so that it is apt to be broken into pieces even by a small scratch.

The curable composition of the invention comprising an acetal compound (A) acting as the first component, a mercapto compound (B) acting as the second component and a compound (C) acting as the third component,

may be added with a component (D) for improving the releaseability of the molded product. Examples of the compound which may be used as the component (D) are silicone compounds each having at least one mercapto group per one molecule and/or ester compounds which are the reaction products of carboxylic acids each having at least one mercapto group per one molecule and straight-chain or side-chain alcohols each having four or more carbon atoms; and compounds each having at least two methacryloyl and/or acryloyl groups per one molecule and an alkyl group having 8 or more carbon atoms or substituted products thereof substituted with halogen atoms.

The silicone compounds each having at least one mercapto group per one molecule and/or ester compounds which are the reaction products of carboxylic acids each having at least one mercapto group per one molecule and straight-chain or side-chain alcohols each having four or more carbon atoms, both being used as the component (D), are represented by the following structural formulae (3), (4) and (5).

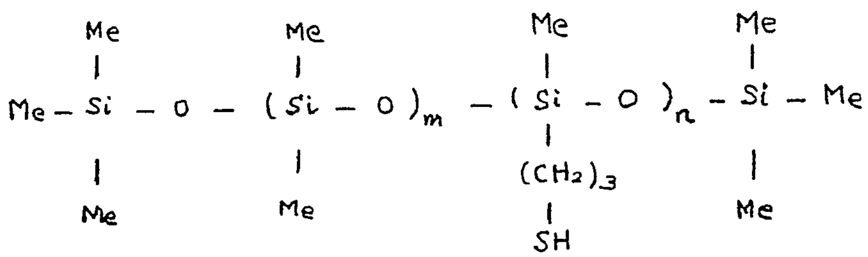 ---- (3)

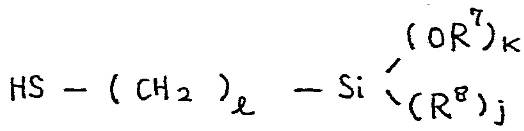

---- (4)

In the above formulae, $\underline{l}$ is an integer of 0 to 8; and $\underline{k}$ and $\underline{j}$ are integers of 0 to 3 and k + j = 3. $R^7$ and $R^8$ are alkyl groups, such as methyl or ethyl. Typical compounds represented by the formula (3) are silicone compounds modified with mercapto as represented by the following formulae of:

$$HS(CH_2)_3-Si-(OMe)_3$$

$$HS(CH_2)_3-\underset{Me}{\underset{|}{Si}}-(OMe)_2$$

$$HS(CH_2)_5-Si-(OMe)_3$$

Examples of ester compound are represented by the following general formula (5) of:

$$HS-(CH_2)_n-\underset{O}{\underset{\|}{C}}-OR \qquad (5)$$

In the formula (5) R is a straight-chain or side-chain alkyl group having 3 to 10 carbon atoms, and $\underline{n}$ is an integer of 1 to 5. If the alkyl group has less than 3 carbon atoms, the resultant mixture has not the desired releasing property. Typical examples of the usable ester compound are 2-ethylhexyl thioglycolate, pentyl thioglycolate, 2-ethylhexyl $\gamma$-mercaptobutylate, and isoamyl $\gamma$-mercaptobutylate.

It is preferred that a carboxylic acid ester having a mercapto group, which acts as the component (D), is preliminarily addition-polymerized with a compound (C) having reactive unsaturated bonds. By such a preliminary addition polymerization, the bleeding of carboxylic acid ester from the cured composition can be prevented to obtain a transparent molded resin which has extremely good releasing property.

In molding of a blend composition containing a heat-resistant monomer, such as bisphenol, a compound having triazine ring or a derivative of isocyanuric acid, it is generally necessitated to use a releasing agent since the releasing property of the blend composition becomes poorer by the blending of such a heat-resistant monomer. In contrast thereto, when a carboxylic acid ester having mercapto group, which acts as a releasing component, is combined with the monomer of the third component (C) prior to the polymerization step, the blended composition exhibits superior releasing property without bleeding of the releasing component after the molding step.

The preliminary polymerization of a carboxylic acid ester having reactive unsaturated bonds with the compound (C) may be completed at 45 to 55°C for 10 minutes to an hour. If the polymerization is carried out at a temperature higher than the aforementioned range, polymerization proceeds excessively so that the reaction

mixture loses its fluidity; whereas the polymerization is carried out at a temperature lower than the aforementioned range, the polymerization degree does not reach the sufficient lebel leading to the result that the molded product is yellowished considerably due to the presence of residual mercapto groups.

The curable composition of the invention may be improved in releasing property when it is added, as the component (D), with a compound having at least two acryloyl and/or methacryloyl groups per one molecule and having an alkyl group having 8 or more carbon atoms or a substituted product thereof having a substituting halogen atom. Typical examples of such compound are those listed in (I) and (II) below.

(I) Trihydric or polyhydric alcohols, such as glycerin, trimethylolpropane and pentaerythritol; acrylic acid, methacrylic acid and/or acid chlorides thereof.

(II) Octylic acid, nonanoic acid, decanoic acid, hexadecanoic acid, stearic acid and/or acid chlorides thereof.

Other usable compounds are those introduced with acryloyl, methacryloyl or alkyl groups to the reactive groups of amino, N-methylol or active halogen groups.

<u>Molding Step</u>:

A disc substrate for information recording discs

may be manufactured by molding the curable composition of this invention through a casting process. Information recording sites of concave or convex shape, for example information pits (or projections) or tracking grooves, are formed on a glass or metal plate by the photo-resist method, and a mold (stamper) for molding a polyester is reproduced therefrom, followed by coating a thin metal film on the surface of the stamper to obtain a mold. The mold is filled with the composition of this invention, which is of liquid form at normal temperature or at a temperature lower than a certain temperature, for example lower than 100°C, by casting the composition into the mold, and then the composition is cured by heating or by being irradiated with a high energy beam. After the completion of curing, the cured product is removed from the mold to obtain a disc substrate. The fine concave and convex pattern is transferred to the surface of the disc surface. As an alternative process, the curable composition of this invention may be cast in-between two glass plates each having a concave and convex pattern, followed by irradiation with a high energy beam through the glass plate to cure the composition, and the cured product is removed from the glass plates to obtain a substrate.

Curing Step:

Prior to the step of curing the curable composition of this invention, the acetal compound (A), the

mercapto compound (B) and the compound (C) having reactive unsaturated bonds are mixed together in a predetermined mixing ratio to obtain a uniform mixture. The mixture is cast into a mold having a predetermined contour and made of a glass, ceramics, plactics or rubber material, and then cured by any one of the following curing steps.

(1) Curing by Irradiation with High Energy Beam:

This method includes the step of curing the curable composition by irradiating the same with an active energy beam, such as γ-ray, X-ray, ultraviolet (UV) ray or electron beam. The irradiation energy of the high energy beam ranges, in general, from not less than 0.01 $J/cm^2$ to not more than 500 $J/cm^2$, preferably from 0.1 to 100 $J/cm^2$. If the irradiated energy is less than 0.01 $J/cm^2$, curing of the composition is incomplete. On the contrary, if the irradiated energy exceeds 500 $J/cm^2$, a portion of the cured product is deteriorated and colored to make it impossible to form a satisfactory information recording disc.

The time required for curing can be shortened by the utilization of this method. Irradiation of the high energy beam may be effected at two or more times or may be effected at one time. A photo-sensitizer or stabilizer may be added to the curable composition, if necessary.

(2) Curing by Heating:

The parameters for curing the curable composition of this invention are varied depending on the heating

temperature, presence or absence of a polymerization initiator and the specific kind and amount of the used polymerization initiator. The heating temperature ranges generally from the room temperature to 300°C, preferably from 50 to 130°C. If the temperature is below the room temperature, the time required for curing is prolonged to reduce the production efficiency. On the contrary, if the composition is heated to a temperature of higher than 300°C, the cured product is adversely affected by heating. The heating time is varied depending on the heating temperature, presence or absence of a polymerization initiator and the specific kind and amount of the used polymerization initiator, and ranges generally from 0.1 to 100 hours, preferably from 1 to 20 hours.

If an excessively large quantity of a polymerization initiator is used, the resultant cured product is colored or becomes brittle. Accordingly, in consideration of the balance of the production efficiency and the properties of the resultant cured product, it is recommended to use not more than 10 parts by weight, preferably not more than 5 parts by weight, of a polymerization initiator is added to 100 parts by weight of the curable composition of this invention.

The step of irradiating with a high energy beam and the heating step may be combined.

(3) Reaction Injection Molding:

The curable composition of this invention may be cured by a process comprising the steps of evacuating the cavity in a mold having a window portion extending from the outside of the mold to the cavity and made of a material which transmits a high energy beam, injecting the curable composition of this invention into the mold, and irradiating the injected curable composition with a high energy beam from the outside of the window portion of the mold to cure the curable composition.

In the reaction injection molding process for molding the curable composition of this invention comprising the steps of injecting a curable composition into the cavity in a mold having at least a portion made of a material which transmits a high energy beam, and irradiating the curable composition with a high energy beam through the mold, it is preferred to provide means for retracting a portion of the mold to contract the cavity of the mold during the step of irradiating with a high energy beam, according to a further aspect of this invention.

An injection molding process has hitherto been known for molding a compact disc, and polycarbonate and polymethyl methacrylate are molded by this known process. However, since a highly viscous molten mass of a resin is injected into the cavity at a high pressure in this known injection molding process, a large shearing stress is applied on the injected resin during the injecting step,

leading to orientation of molecules to araise significant optical anisotropy in the molded disc. For this reason, if a disc for recording informations by optical means is molded by the conventional injection molding process, there is a risk that errors are often resulted in reproduction of the stored informations. The injection molding process has another disadvantage that the stamper attached over the surface of the cavity in the mold is abrased rapidly to shorten the lifetime of the stamper.

If the conventional injection molding process is employed, it is necessary to use a resin having a melting point as low as possible in order that the optical anisotropy or warping due to shrinkage at the molding step is obviated. For this reason, the heat resistance of the thus produced disc cannot be improved to a satisfactory level. As a consequence, if a large output semiconductor laser is used to increase the recording and reproduction speed of informations, the grooves for tracking or pits are apt to be fused to erase the informations. The insufficient heat resistance thus impedes high speed read-out operation.

The so-called 2p (photo polymer) method is known, wherein a transparent substrate made of a glass is placed in face to face relationship with a stamper, a curable resin which may be cured by irradiation with an ultraviolet ray is cast in-between the stamper and the substrate, the resin is then irradiated with an ultraviolet ray through the

substrate while compressing the substrate against the stamper, and thereafter the stamper is peeled off to form a disc including a substrate layer and a pit layer on which the pits are transferred. In this known 2p method, an expensive optical grade glass must be used as the transparent substrate to result in increase in production cost of the finished disc. Moreover, the curable resin often swallows air bubbles up during the step of casting the resin in-between the stamper and the substrate, and the thus swallowed air bubbles might induce errors in writing operation. The disc produced by this known method has a disadvantage that the pit layer is apt to be peeled off from the transparent glass substrate due to the temperature change since the thermal expansion coefficient of the glass and that of the cured resin is different from each other to require prudent handling.

The aforementioned disadvantages of the conventional processes may be overcomed by the reaction injection molding process, according to this invention, to form a substrate at good production efficiency.

An embodiment of the mold and molding apparatus for molding a photo-information recording disc, according to this invention, will now be described.

Fig. 1 shows a mold to be assembled with a molding apparatus and used in the reaction injection molding process; Fig. 2 is an enlarged view showing schematically a

portion of the mold; and Fig. 3 is a view showing a molding apparatus.

A mold 1 comprises an upper mold 2 and a lower mold 3, a cavity 4 being formed between the upper mold 2 and the lower mold 3. The upper mold 2 includes a mounting plate 2a, an intermediate plate 2b and a mold plate 2c. The upper mold 2 is provided with a window 5 through which an ultraviolet ray used as the high energy beam transmits as will be described hereinafter.

The window 5 comprises a first quarz glass plate 5a grasped by the mounting plate 2a and the intermediate plate 2b, and a second quarz glass plate 5b grasped by the intermediate plate 2b and the mold plate 2c, a cooling chamber 5c being formed between the first and second quarz glass 5a and 5b for flowing therethrough a cooling medium for cooling the mold 1. The cooling chamber 5c communicates with cooling medium passages 6, 6. A cooling medium which does not hinder transmission of a high energy beam, which will be described hereinafter, is flown through the cooling chamber 5c. The cooling chamber 5c is held liquid tight by means of packings 7, 7 disposed on both sides of the intermediate plate 2b to engage with the first and second quarz glass plates 5a, 5b.

The lower mold comprises a mounting plate 3a, a receiver plate 3b and a mold plate 3c. The cavity 4 is defined between the quarz glass plate 5b and the mold plate

3c.

A nozzle 8 extends through the lower mold 3 to open to the center of the cavity 4. A stamper 9 is held and fixed by an annular stamper fixing frame 10 to form a cavity surface 4a on the mold plate 3c. The stamper fixing frame 10 is secured to a sprue bush 11 which is fitted on the nozzle 8. The stamper fixing frame 10 and the sprue bush 11 are fixedly secured to the lower mold 3 by means of a screw 12.

The mold 1 has a special structure for contracting the cavity 4 during the molding step. As shown in Fig. 2 which is an enlarged view of the portion denoted by A in Fig. 1, the lower face of the second quarz glass plate 5b extends beyond the lower face of the mold plate 2c. The mold plate 3c of the lower mold 3 is provided with an concaved portion 21 to form the cavity 4, and has a bottom face over which the stamper 9 is attached. A ring member 22 is inserted in the concaved portion 21 of the mold plate 3c and has an inner periphery which engages liquid-tightly and slidingly with the peripheral surface of the quarz glass plate 5b extending from the upper mold 2. The marginal portion along the periphery of the stamper 9 is fixed by the ring member 22. The thickness of the ring member 22 is greater than the thickness of the finished molded product. Packings 13, 14 are used to held the cavity liquid-tight. For this purpose, O-rings or Teflon seal rings may be used.

The exposed surface of the stamper fixing frame 10 is applied with a surface treatment, for example Teflon coating, to ensure air-tightness of the cavity 4. Air in the cavity 4 may be evacuated through the air discharge passage 15 extending through the lower mold 3.

The air discharge passage 15 is formed by a bore 15a extending through the sprue bush 11, and the gap 15b between the sprue bush 11 and the stamper fixing frame 10. The gap 15b is of the size to permit passage of gases but to prevent passage of the resin cast into the cavity 4.

Fig. 3 shows an embodiment of the molding apparatus. The illustrated molding apparatus comprises a high energy beam irradiating device 31, a mold clamping mechanism 32, an injection mechanism and a temperature adjusting mechanism (not shown).

The high energy beam irradiating device 31 may be assembled with a reflector (not shown) for uniformalize the orientation and distribution of the beam. The conditions for irradiation is controlled by a control unit 33 of the iradiating device. The mold clamping mechanism 32 comprises an upper plate 32a on which the upper mold 22 is mounted, a lower plate 32b on which the lower mold 3 is mounted, and a driving unit 32c for moving the lower plate 32b in the vertical direction. The clamping mechanism 32 of the molding apparatus is further provided with an air cylinder 35 beneath the lower plate 2b to be actuated to contract the

cavity 4 of the mold 1. The nozzle 8 of the mold 1 communicates with an injection system 26 through a hose, and the air discharge passage 15 of the mold 1 is connected to a vacuum pump 25. The vacuum pump is actuated to discharge air in the cavity. Preparatory to molding, the upper mold 2 of the mold 1 is mounted on the upper plate 32a of the molding apparatus, and the lower mold 3 is mounted on the lower plate 32b. At the initial stage (shown in Fig. 2), the upper and lower molds 2, 3 are closed so that a gap is left between the mold plate 2c of the upper mold 2 and the mold plate 3c of the lower mold 3 and so that the second quarz glass plate 5b of the upper mold 2 is inserted in the ring member 22 of the lower mold at some extent. Under this condition, air in the cavity is discharged through the air discahrge passage 15.

It is desirous that the air pressure in the cavity 4 is not higher than 1 Torr. If the air pressure in the cavity 4 is higher than 1 Torr, there is a risk that a disc containing air bubbles is formed leading to low yield.

After the completion of evacuation of the cavity 4, a curable composition is injected through the nozzle 8 into the cavity 4 by the injection means 26 of the molding apparatus. The curable composition, according to the present invention, which is cured by cross-linking when irradiated with a high energy beam is used as the injected curable composition. The composition is fully defoamed

prior to injection.

After the completion of injecting a predetermined amount of the curable composition into the cavity 4 of the mold 1, the beam radiating device 31 of the molding apparatus is actuated so that the curable composition in the cavity 4 is irradiated with a high energy beam through the window portion 5 of the mold 1.

The clamping mechanism 32 of the molding apparatus is actuated to open the mold 1 so that the cured curable composition which has been cured by irradiation with a high energy beam is removed from the mold 1 to obtain a molded disc. The thus prepared disc has a surface on which the pits formed on the cavity surface 4a of the stamper 9 attached to the mold 1 are transferred.

Discs are successively produced by repeating the aforementioned operations.

According to a further aspect of this invention, a portion of the mold is moved to contract the cavity during the curing step in the injection molding process, wherein a liquid composition is injected into the mold followed by curing reaction, so as to prevent the phenomenon that a surface portion of the molded product is sunk (formation of sink mark) due to shrinkage of the injected composition by the curing reaction. Contraction of the cavity 4 is effected by moving the upper mold 2 and the lower mold 3 closer to one another. For this purpose, the mold clamping

mechanism 32 of the molding apparatus is provided with an air cylinder disposed beneath the lower mold for contracting the cavity in the mold 1.

In the improved molding process described above, the cavity 4 is contracted by biasing the lower mold 3 toward the upper mold 2 to move the former closer to the latter by applying a certain pressure through the air cylinder.

Although it has been described that the window portion 5 of the mold is made of quartz glass, it may be made of a material which transmits a high energy beam, the specific examples being optical grade glass and salt crystals. The window may be formed of a thin metal plate when the used high energy beam is $\gamma$-ray.

The substrate made of a transparent resin is covered by a recording medium layer to obtain a photo-memory disc. The adhesiveness between the recording medium layer and the transparent resin is lowered with the lapse of time to arise a risk that the recording medium layer is readily separated from the substrate. In order to prevent separation or peeling off of the recording medium layer, an aluminium oxide layer having a thickness of 80 nm to 10000 nm is formed over the surface of the molded product prepared by curing the curable composition of this invention.

The aluminium oxide layer may be formed on the surface of the molded product by the vacuum deposition

method, sputtering method or ion plating method. The aluminium oxide layer has a fair affinity with the cured composition prepared in accordance with the present invention. The aluminium oxide layer is adapted to be closely adhered with the recording medium layer disposed on the transparent cured composition. The substrate made of the transparent cured composition prepared by this invention can thus united closely with the recording medium layer. The thus produced photo-memory disc is durable for a long use time without suffering from separation of the aluminium oxide layer.

The curable composition of this invention provides a cured product having superior properties as the effect of complementary functions of individual components contained therein. In detail, the combination of the acetal compound (A) and the mercapto compound (B) provides a cured product which has good operationability and excellent water-proof property. The cured product molded from the curable composition comprised of the acetal compound (A), the mercapto compound (B) and the compound (C) having reactive unsaturated bonds and selected from the group consisting of bisphenols, compounds having triazine rings and derivatives of isocyanuric acid has improved properties superior over the properties expected by the use of other compositions.

## Brief Description of the Drawings

Fig. 1 is a diagrammatical sectional view showing

a mold which is used for reaction injection molding of the curable composition of this invention;

Fig. 2 is an enlarged sectional view showing a portion of the mold shown in Fig. 1;

Fig. 3 is a view showing a reaction injection molding apparatus which may be used to mold a photo information recording disc from the curable compositin of this invention; and

Fig. 4 is a view showng the structures of composite films.

## Best Mode for Practice of the Invention

The curable composition and process for molding the same, according to the present invention, will now be described more in detail with reference to specific examples thereof. Each of the disc prepared in the following Examples has an outer diameter of 120 mm, an inner diameter of 15 mm and a thickness of 1.2 mm. The properties of the produced molded products are determined by the following tests.

1. Heat Resistant Property (HDT heat distortion temperature):

The test was conducted in accordance with the ASTM D-648 method while applying with a loading of 66 psi.

2. Water Absorption:

In accordance with the ASTM D-570 method, each

molded product was immersed in water at 23°C for 24 hours and the water absorption thereof was determined.

3. Determination of Double Refraction:

Each molded disc was rotated and the birefringence at various points were measured using an automatic ellipsometer. The used light source was a He-Ne laser having a wavelength of 632.8 nm. Double-pass data are shown as the measured values. The birefringence is the average value of the absolute values of retardation.

4. Shrinkage by Polymerization:

Shrinkage was calculated by comparing the density of the polymerized composition.

5. Surface Hardness:

The surface hardness was determined by the Bacol Hard Method.

6. Resistance to Solvent:

Each sample was immersed in acetone and methylene chloride, and change on the surface was visually observed.

O ----- not changed    X ----- changed

7. Izod Impact Value:

Each specimen was cut to form a V-notch, and subjected to the test in accordance with ASTM D-256 method.

8. Transparency:

The transparency of each specimen was determined using a light having a wavelength of 780 nm.

Example 1

21.2 parts (parts by weight; "part" stands for "part by weight" throughout the following description) of diallylidenepentaerythritol (A-1) was dissolved in 21.6 parts of pentaerythritol tetrathioglycolate (B-1), followed by agitating at 50°C for 30 minutes. 40 parts of trimethylolpropane triacrylate and 0.4g of benzophenone were added to prepare a composition. The composition was cast in a glass mold and then irradiated for about 100 seconds with ultraviolet rays emitted from 3 KW metal halide lamps each being disposed at a distance of 15 cm from each side of the mold to polymerize the cast composition. A colorless and transparent molded product was obtained.

Example 2

The procedures as described in Example 1 were repeated except that 80 parts of N, N',N"-tris(acryloyl-methyl)-N,N'N"-tris(methoxymethyl)melamine (C-1-1) was further added to the composition to obtain a colorless and transparent molded product.

Example 3

21.2 parts of diallylidenepentaerythritol (A-1) was dissolved in 20.5 parts of 1,1,1-trimethylolpropane trithioglycolate (B-2), followed by agitating at 50°C for 30 minutes. A composition was prepared by further adding with 40 parts of pentaerythritol acrylate, 40.2 parts of N,N,N',N',N",N"-hexakis(2-acryloylethoxymethyl)melamine (C-1-2) and 0.15 parts of azobisisobutylonitrile. The

composition was cast into the same glass mold as used in Example 1. The mold was immersed in a warm water bath maintained at 70°C for 30 minutes, and then the temperature of the warm water bath was raised to 90°C at a temperature increase rate of 10°C per an hour. The content in the mold was allowed to stand at 90°C for 3 hours, and then allowed to stand at 120°C for 2 hours by transferring the mold into a high temperature bath maintained at 120°C to complete polymerization, whereby a colorless and transparent molded product was obtained.

Example 4

Generally following to the procedures as described in Example 3, a composition was prepared except that 29.4 parts of diallylidene-2,2,6,6-tetramethylolcyclohexanone (A-2) was used in place of diallylidenepentaerythritol (A-1) and that 0.10 part of benzoin propyl ether was used in palce of azobisisobutylonitrile. The subsequent procedures were the same as described in Example 1 to obtain a colorless and transparent molded product.

Comparative Example 1

0.1 part of banzoin isopropyl ether was added to 100 parts of N,N,N',N',N",N"-hexakis(2-acryloyl-ethoxymethyl)melamine (C-1-2), and the thus prepared composition was processed similarly as in Example 1 to obtain a colorless and transparent molded product.

Comparative Example 2

The procedures as described in Example 3 were repeated except that 1,1,1-trimethylolpropane trithioglycolate (B-2) used in Example 3 was not used in this Comparative Example, whereby a transparent molded product was obtained.

Comparative Example 3

An injection molded product was prepared by using a PMMA resin (produced by Kyowa Gas Kagaku Kogyo).

Comparative Example 4

An injection molded product was prepared by using a polycarbonate resin (produced by Teijin Kasei).

Comparative Example 5

4 parts of IPP (diisopropyl peroxydicarbonate) was added to 96 parts of CR-39 (diethyleneglycol bis-allyl carbonate) monomer (produced by PPG. Industry Corp.) to prepare a composition which was cast in the same mold as used in Example 1 and maintained at 38°C for 15 hours. The temperature was raised to 60°C over a period of 3 hours, and then the content in the mold was maintained at 60°C for 2 hours. The content in the mold was cooled to the room temperature over a period of 2 hours, and then subjected to annealing at 115°C for an hour to obtain a colorless and transparent molded product.

The properties of the products of Examples 1 to 4 and Comparative Examples 1 to 5 are set forth in Table 1.

Table 1

| Property (unit) | HDT (°C) | Water Absorption (%) | Birefringence (nm) | Surface Hardness | Resistance to Solvent | Izod Impact Value (kgf/cm/cm) | Transparency (%) |
|---|---|---|---|---|---|---|---|
| Example 1 | 115 | 0.20 | 3 | 41 | ○ | 0.99 | 93 |
| Example 2 | 130 | 0.22 | 5 | 48 | ○ | 1.30 | 93 |
| Example 3 | 155 | 0.22 | 4 | 48 | ○ | 1.25 | 93 |
| Example 4 | 162 | 0.22 | 4 | 48 | ○ | 1.31 | 93 |
| Comparative Example 1 | 171 | 0.30 | 10 | 55 | ○ | 0.10 | 92 |
| Comparative Example 2 | 155 | 0.25 | 10 | 48 | ○ | 0.80 | 93 |
| Comparative Example 3 | 86 | 0.30 | 10 | 43 | × | 0.97 | 93 |
| Comparative Example 4 | 135 | 0.20 | 50 | 12 | × | 1.50 | 90 |
| Comparative Example 5 | 100 | 0.22 | 15 | 26 | ○ | 0.30 | 92 |

A molded product, which is low in double refraction and small in water absorption, is molded from the combination of the acetal compound (Compound A) and the mercapto compound (Compound B). The heat resistance and the surface hardness of the molded product can be improved by the addition of a compound having triazine ring.

The materials of the invention are well-balanced in their heat resistances, optical properties and surface hardnesses when compared to the conventional PMMA resin, polycarbonate resin and CR-39 resin.

The systems added with bisphenols as the Component C were tested. The bisphenols used in the following Examples are represented by the formulae of:

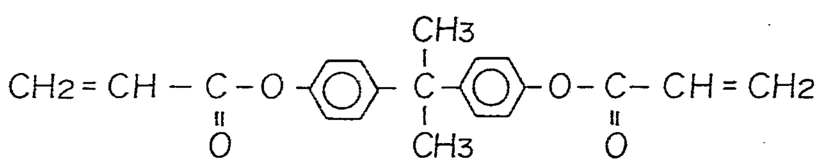

(C-2-1)

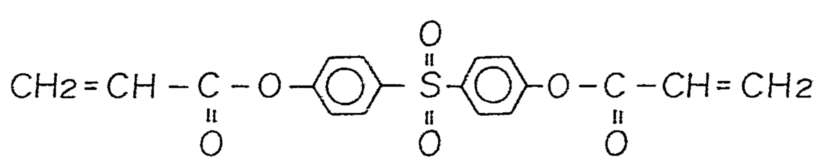

(C-2-2)

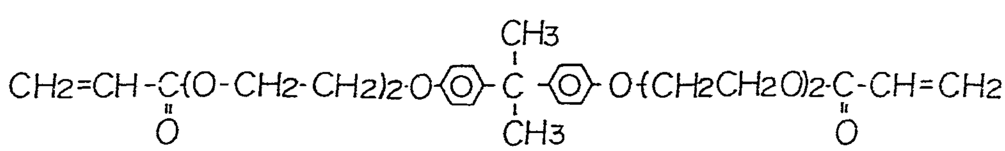

(C-2-3)

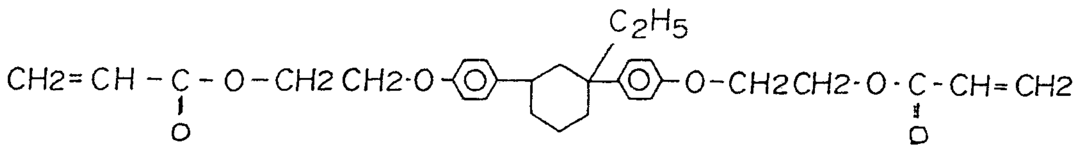

(C-2-4)

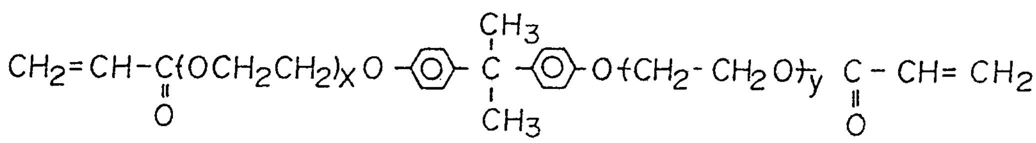

(C-2-5)

x + y = 17

Example 5

21.2 parts of diallylidenepentaerythritol (A-1) was dissolved in 21.6 parts of pentaerythritol tetrathioglycolate (B-1), followed by agitating at 50°C for 30 minutes to prepare a Compositon A. 40 parts of trimethylolpropane triacrylate was added with 0.1 part of bvenzoin isopropyl ether and 40 parts of (C-2-1), and heated at 60°C to dissolve the components uniformly and then cooled to the room temperature. The Composition A was added to the second composition and agitated until a uniform admixed composition was formed. The admixed composition was cured similarly as in Example 1 to obtain a colorless and transparent molded product.

Examples 6 to 8

In Examples 6, 7 and 8, (C-2-2), (C-2-3) and (C-2-4) were used in place of (C-2-1) used in Example 5 to

obtain molded products respectively.

Comparative Example 6

Generally following to Example 5 except that 40 parts of (C-2-5) was used in place of (C-2-1), a colorless and transparent molded product was prepared.

Comparative Example 7

50 parts of (C-2-1) was added with 0.1 part of benzoin isopropyl ether and further added with 50 parts of trimethylolpropane triacrylate, and the mixture was dissolved uniformly at 60°C. The following procedures were similar to Example 1 to obtain a molded product.

The properties of the molded products prepared by Examples 5 to 8 and Comparative Examples 6 and 7 are set forth in Table 2 together with the data of Example 1 and Comparative Examples 3 to 5.

Table 2

| Property (unit) | HDT (°C) | Water Absorption (%) | Birefringence (nm) | Surface Hardness | Resistance to Solvent | Izod Impact Value (kgf/cm/cm) | Transparency (%) |
|---|---|---|---|---|---|---|---|
| Example 5 | 135 | 0.18 | 8 | 48 | ○ | 0.92 | 92 |
| Example 6 | 138 | 0.22 | 10 | 48 | ○ | 0.92 | 91 |
| Example 7 | 120 | 0.20 | 8 | 46 | ○ | 1.30 | 92 |
| Example 8 | 133 | 0.20 | 8 | 48 | ○ | 1.00 | 92 |
| Comparative Example 6 | 75 | 0.21 | 7 | 32 | ○ | 1.90 | 92 |
| Comparative Example 7 | 130 | 0.20 | 15 | 50 | ○ | 0.20 | 90 |
| Example 1 | 115 | 0.20 | 3 | 41 | ○ | 0.99 | 93 |
| Comparative Example 3 | 85 | 0.30 | 10 | 43 | × | 0.97 | 93 |
| Comparative Example 4 | 135 | 0.20 | 50 | 12 | × | 1.50 | 90 |
| Comparative Example 5 | 100 | 0.22 | 15 | 26 | ○ | 0.30 | 92 |

The heat resistances of the molded products are improved by the addition of bisphenols, and the products have the properties superior over those of the conventional PMMA and polycarbonate resin.

The systems added with derivatives of isocyanuric acid as the Component C were tested. The compounds used in the following Examples are represented by the formulae of:

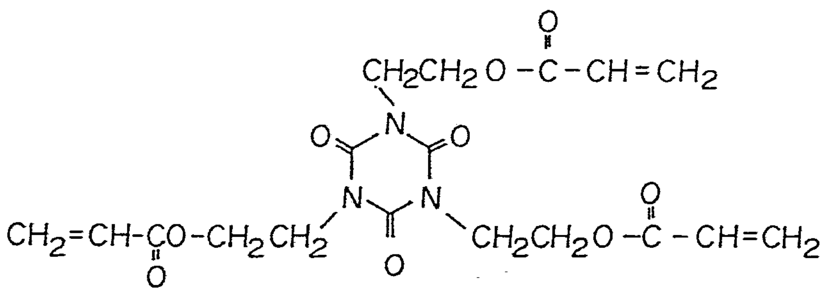

(C-3-1)

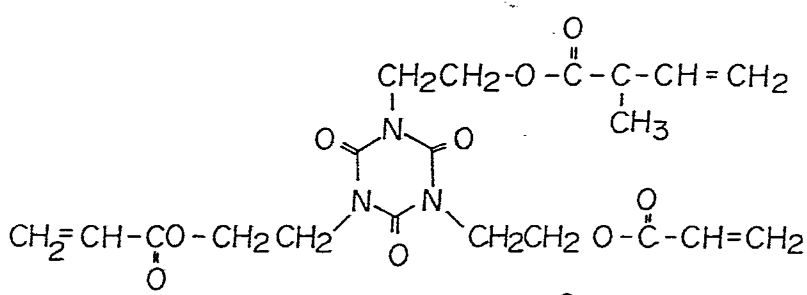

(C-3-2)

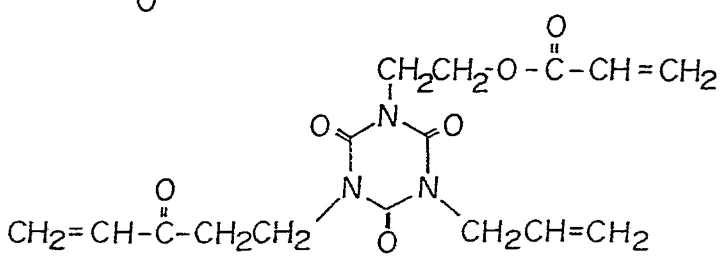

(C-3-3)

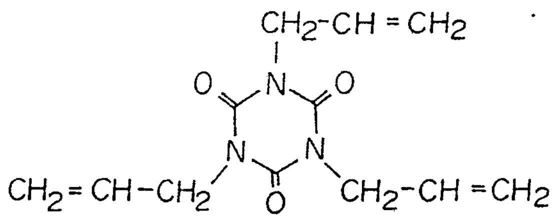

(C-3-4)

Example 9

21.2 parts of diallylidenepentaerythritol (A-1) was dissolved in 21.6 parts of pentaerythritol tetrathioglycolate (B-1), followed by agitating at 50°C for 30 minutes. 40 parts of (C-3-1) was mixed with 0.2 part of benzophenone, and the mixture was added to the mixture of the compound (A-1) and (B-1) and agitated until a uniform admixture was formed. The admixture was cured similarly as in Example 1 to obtain a colorless and transparent molded product.

Examples 10 and 11

In Examples 10 and 11, (C-3-2) and (C-3-3) were used in place of (C-3-1) used in Example 9.

Comparative Example 8

10.6 parts of diallylidenepentaerythritol (A-1) and 8.3 parts of the compound represented by the formula (C-3-4) were dissolved in 21.6 parts of pentaerythritol tetrathioglycolate (B-1), followed by agitating at 50°C for 30 minutes, and then added with 40 parts of trimethylolpropane triacrylate and 0.1 parts of benzoin ethyl ether. The admixture was agitated until a uniform

composition was formed.

The following procedures were similar to Example 1 to obtain a colorless and transparent molded product.

Comparative Example 9

100 parts of the compound represented by the formula (C-3-1) qas added with 0.1 part of benzoin ethyl ether, and the thus prepared composition was processed similarly as in Example 1 to obtain a colorless and transparent molded product.

The Properties of the molded products prepared by Examples 9 to 11 and Comparative Examples 8 and 9 are set forth in Table 3 together with the data of Example 1 and Comparative Examples 3 to 5.

Table 3

| Property (unit) | HDT (°C) | Water Absorption (%) | Birefringence (nm) | Surface Hardness | Resistance to Solvent | Izod Impact Value (kgf/cm/cm) | Transparency (%) |
|---|---|---|---|---|---|---|---|
| Example 9 | 130 | 0.22 | 6 | 50 | ○ | 1.02 | 92 |
| Example 10 | 132 | 0.22 | 6 | 50 | ○ | 1.01 | 92 |
| Example 11 | 125 | 0.21 | 6 | 47 | ○ | 0.98 | 92 |
| Comparative Example 8 | 120 | 0.20 | 12 | 48 | ○ | 0.88 | 91 |
| Comparative Example 9 | 140 | 0.27 | 18 | 53 | ○ | 1.12 | 91 |
| Example 1 | 115 | 0.20 | 3 | 41 | ○ | 0.99 | 93 |
| Comparative Example 3 | 86 | 0.30 | 10 | 43 | × | 0.97 | 93 |
| Comparative Example 4 | 135 | 0.20 | 50 | 12 | × | 1.50 | 90 |
| Comparative Example 5 | 100 | 0.22 | 15 | 26 | ○ | 0.30 | 92 |

The following are the results of the systems each containing a fourth component (Component D). The Component D is used to improve the releaseability of the molded product from the mold.

The following compounds were used as the Component D.

Silicone Oil Modified with Mercapto Group (D-1)
(X-22-980 produced by The Shin-etsu Chemical Industry Co., Ltd.)

2-Ethylhexyl Thioglycolate (D-2)

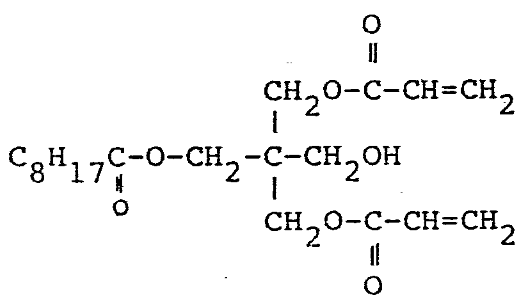

(D-3)

Neopentylglycol Diacrylate (D-4)

Example 12

25 parts of diallylidene-2,2-6,6-tetramethylol-cyclohexanone was dissolved in a mixture containing 25 parts of 1,1,1-trimethylolpropane tri( $\beta$-mercapto)propionate and 30 parts of 1,1,1-trimethylolpropane triacrylate, and added with 0.4 part of benzophenone. Separately, 60 parts of 2,2-bis(4-(2-acryloylethyloxy)phenyl)propane was added with 1.0 part of a silicone oil modified with mercapto group (D-1), and agitated at 50°C for 15 minutes. The former

mixture was added with the latter mixture, and mixed and agitated sufficiently. A molded product was formed from the thus prepared composition similar to Example 1.

Example 13

A first mixture was prepared by mixing, under sufficient agitation, 30 parts of diallylidenepentaerythritol, 30 parts of glycerin tetrathioglycolate, 60 parts of ethyleneglycol diacrylate and 0.20 part of azobisisobutylonitrile. Separately, a second mixture was prepared by adding 2.5 parts of 2-ethylhexyl thioglycolate (D-2) to 80 parts of tri(2-acryloylethyloxy)isocyanurate. The first and second mixtures were admixed with each other and agitated vigorously at 45°C for 20 minutes. The thus prepared composition was cast into a glass mold, maintained at 70°C for 30 minutes, and then the temperature was raised to 90°C at a temperature increase rate of 10°C per an hour and maintained at 90°C for additional 3 hours. Thereafter, the composition was cured at 120°C for 2 hours.

Example 14

A uniform mixture was prepared by adding 21 parts of 1,1,1-trimethylolpropane trithioglycolate to 21.2 parts of diallylidenepentaerythritol, followed by agitating at 50°C for 30 minutes. The mixture was then added with 1 part of the compound represented by the formula (D-3). 20 parts of N,N,N',N',N",N"-hexakis(2-acryloylethoxymethyl)melamine and 40 parts of trimethylolpropane triacrylate were mixed

together and added to the former-mentioned mixture. The admixture was agitated until a uniform composition was formed. A transparent molded product was prepared from the composiition, similarly as in Example 2.

Comparative Examples 10 to 12

In Comparative Examples 10, 11 and 12, molded products were formed from the compositions, respectively, having similar compositions as used in Examples 12 to 14 except that the Components D were not contained.

Comparative Example 13

Generally similar to Example 14, except that 1 part of (D-4) was used in place of (D-3) used in Example 14, a colorless and transparent molded product was obtained.

The releasing properties of the molded products prepared by Examples 12 to 14 and Comparative Examples 10 to 13 are set forth in Table 4.

The releasing property means the condition for releasing when each molded product is initially contained in water maintained at 60°C and then thrown into water maintained at 25°C. In the Table, the mark ○ indicates that the molded product has satisfactory releasing property, the mark △ indicates that the molded product is hardly separated from the mold, and the mark × indicates that extreme difficulty is encountered for the removal of molded product.

Table 4

| | Examples of the Invention | | | Comparative Examples | | | |
|---|---|---|---|---|---|---|---|
| | 12 | 13 | 14 | 10 | 11 | 12 | 13 |
| Releasing Property | ○ | ○ | ○ | △ | △ | × | △ |

When the molded products prepared in accordance with the present invention are used as the substrates for photo-memory discs, the adhesiveness thereof to the recording media is an important factor. Accordingly, embodiments provided with intermediate layers will now be described.

Example 15

The molded product prepared by Example 1 was contained in a vacuum deposition apparatus, and the container was evacuated for 3 hours until the environment in the container reached $2 \times 10^{-6}$ Torr. The temperare in the container was maintained at 50°C. Aluminium oxide ($Al_2O_3$) was deposited, while introducing oxygen gas at a pressure of $10^{-4}$ Torr, at a deposition rate of 200 Å/min until a 2000 Å thick coating was formed. A 5000 Å thick aluminium layer was then formed on the aluminium oxide layer by vacuum deposition, and then covered with a protection layer made of an epoxy resin.

Example 16

Generally following to the procedures as in Example 15, a disc was produced using the molded product prepared by Example 3.

Example 17

Generally following to the procedures as in Example 15, a disc was produced using the molded product prepared by Example 5.

Example 18

Generally following to the procedures as in Example 15, a disc was produced using the molded product prepared by Example 9.

Example 19

The molded product prepared by Example 1 was contained in a DC magnetron sputtering apparatus, and the container was evacuated for 3 hours until the environment in the container reached $5 \times 10^{-6}$ Torr. An aluminium oxide layer was formed on the target molded product while introducing argon gas at a pressure of $1.5 \times 10^{-3}$ Torr and maintaining the distance between the target and the source was maintained at 15 cm. A 1900 Å thick layer was formed at a deposition rate of 200 Å/min. Then, a 2100 Å thick zirconium oxide layer was formed on the aluminium oxide layer at a deposition rate of 300 Å/min. A 5000 Å thick aluminium layer was formed on the zirconium oxide layer, and then covered with an epoxy resin coating.

Comparative Example 14

The aluminium oxide layer as described in Example 15 was omitted and an aluminium layer was formed directly on the substrate.

Comparative Examples 15 to 17

Generally following to Example 15 except that a layer of $ZrO_2$, $TiO_2$ and $SiO_2$ were formed in place of the $Al_2O_3$ layer to obtain samples of Comparative Examples 15, 16 and 17.

Comparative Example 18

Generally following to the procedures as described in Example 19, the aluminium oxide layer and the zirconium oxide layer were applied in the reverse order.

The discs prepared by Examples 15 to 19 and Comparative Examples 14 to 18 were subjected to test to learn the adhesivenesses or integrities thereof.

The test was conducted as follows.

The surface of the epoxy resin protection layer was cut by a knife to form 100 gratings each having a size of 1 mm square, and the thus cut surface was applied intimately with a cellophane base adhesive tape (produced by Nichiban Co., Ltd.). The tape was then peeled off abruptly at a peeling angle of 90 degrees. The number of the gratings which were not peeled off from the substrate was counted. The number of the gratings left on the substrate is shown in the following Table.

Meantime, the multi-layered structures are shown in Fig. 4.

The results of peeling tests are shown in Table 5.

Table 5

| | Examples of the Invention | | | | | Comparative Examples | | | | |
|---|---|---|---|---|---|---|---|---|---|---|
| | 15 | 16 | 17 | 18 | 19 | 14 | 15 | 16 | 17 | 18 |
| Adhesiveness | 90 | 100 | 96 | 92 | 100 | 20 | 52 | 41 | 48 | 62 |

The composition of this invention can be cast in a glass mold and then cured by irradiation with ultraviolet rays or by heating, and also can be molded using the mold shown in Fig. 1 and the molding apparatus shown in Fig. 3.

Disc substrates may be produced successively by employing the method as will be described hereinbelow.

Example 20

The composition as used in Example 1 was prepared, and disc substrates were molded while using the apparatus shown in Fig. 3.

The mold shown in Fig. 1 was closed and evacuated until the pressure in the cavity 4 reached $10^{-1}$ Torr. The width of the cavity 4 was 1.3 mm. The composition prepared in accordance with Example 1 was cast in the evacuated cavity through a meterical pump at a pressure of 5 $kg/cm^2$. Using a xenon lamp, the composition was irradiated with

ultraviolet rays through the quarz glass plates 5a and 5b of the window 5 of the mold 1 over a period of 100 seconds. The lights emitted from the xenon lamp were collected using a reflection plate. During the step of irradiating with ultraviolet rays, the mold 1 was cooled by flowing cooling water maintained at 30°C. The disc having an outer diameter of 120 mm and a thickness of 1.2 mm was then removed from the mold 1. The operation sequence could be repeated continuously.

Example 21

A disc was molded similarly as in Example 20, except that the composition prepared by Example 9 was used.

Example 22

Similar operation sequences were repeated except that the content in the mold is pressed at a pressure of 6 $kg/cm^2$ by means of the clamping mechanism disposed beneath the mold during the step of irradiating with ultraviolet rays.

Example 23

Using the composition prepared in Example 13, a disc was molded generally following to the procedures as described in Example 22.

Comparative Examples 19 and 20

The molding processes as described in Examples 1 and 2 are compared with the continuous processes, as Comparative Examples 19 and 20.

The molding cycle and the possibility of continuous operation, as to Examples 20 to 23 and Compartive Examples 19 and 20, are tabulated in Table 6.

Meantime, the molding cycle means the time required for molding one sheet of disc.

Table 6

| | Birefringence (nm) | Molding Cycle (sec) | Possibility of Continuous Operation | Remarks |
|---|---|---|---|---|
| Example 20 | 3 to 5 | 120 | Yes | |
| Example 21 | 6 | 120 | Yes | |
| Example 22 | 6 | 120 | Yes | |
| Example 23 | 3 | 120 | Yes | |
| Comparative Example 19 | 3 | 120 | No | Cured by Exposing to Light Example 1 |
| Comparative Example 20 | 5 | 7.5 hours | No | Cured by Heating Example 2 |

Claim

1. A curable composition, comprising:

a compound having at least two unsaturated cycloacetal groups per one molecule; and

a compound having at least two mercapto groups per one melecule.

2. The curable composition according to claim 1, wherein each of the cycloacetal groups of said compound having at least two unsaturated cycloacetal groups stands for either one of:

unsaturated dioxane type: 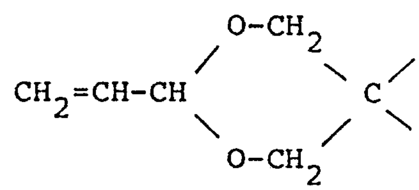 ; or

unsaturated dioxolane type: 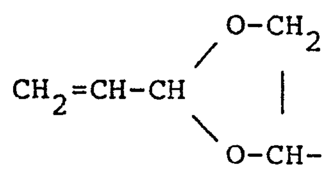 ;

and wherein said compound having at least two mercapto groups is an aliphatic polymercaptan or an aromatic polymercaptan.

3. The curable composition according to claim 1 comprising a compound having at least two unsaturated cycloacetal groups per one molecule and a compound having at least two mercapto groups per one melecule, and further added with a silicon-containing compound having at least one mercapto group per one molecule and/or a carboxilic ester which is a reaction product of a carboxilic acid having at

least one mercapto group per one molecule and a straight-chain or side-chain alcohol having four or more carbon atoms.

4. The curable composition according to claim 1 comprising a compound having at least two unsaturated cycloacetal groups per one molecule and a compound having at least two mercapto groups per one melecule, and further added with a compound having at least two acryloyl and/or methacryloyl groups per one molecule and having not less than 8 to 17 carbon atoms, or a substituted product thereof having a substituting halogen atom.

5. A curable composition, comprising:

a compound having at least two unsaturated cycloacetal groups per one molecule;

a compound having at least two mercapto groups per one melecule; and

a compound having at least two reactive unsaturated bonds per one molecule.

6. The curable composition according to claim 5, wherein each of the cycloacetal groups of said compound having at least two unsaturated cycloacetal groups stands for either one of:

unsaturated dioxane type: 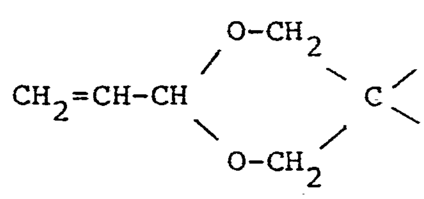 ; or

unsaturated dioxolane type: 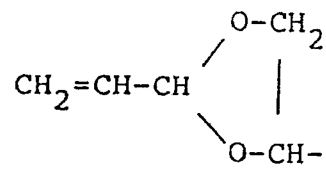 .

7. The curable composition according to claim 5, wherein said compound having at least two mercapto groups is an aliphatic polymercaptan or an aromatic polymercaptan.

8. The curable composition according to claim 5, wherein said compound having at least two reactive unsaturated bonds is a bisphenol having at least two acryloyl or methacryloyl groups per one molecule.

9. The curable composition according to claim 5, wherein said compound having at least two reactive unsaturated bonds is a compound having at least two acryloyl or methacryloyl groups per one molecule and having a triazine ring.

10. The curable composition according to claim 5, wherein said compound having at least two reactive unsaturated bonds is a derivative of isocyanuric acid having at least two acryloyl or methacryloyl groups per one molecule.

11. The curable composition according to claim 5, wherein said compound having at least two reactive unsaturated bonds is a compound having at least one vinyl group, allyl group, acryloyl group or methacryloyl group.

12. The curable composition according to claim 5 comprising:

a compound having at least two unsaturated cycloacetal groups per one molecule;

a compound having at least two mercapto groups per one molecule;

a compound having at least two reactive unsaturated bonds per one molecule; and

further added with a silicon-containing compound having at least one mercapto group per one molecule and/or a carboxilic ester which is a reaction product of a carboxilic acid having at least one mercapto group per one molecule and a straight-chain or side-chain alcohol having four or more carbon atoms.

13. The curable composition accoridng to claim 5 comprising:

a compound having at least two unsaturated cycloacetal groups per one molecule;

a compound having at least two mercapto groups per one molecule;

a compound having at least two reactive unsaturated bonds; and

further added with a compound having at least two acryloyl and/or methacryloyl groups per one molecule and having 8 to 17 carbon atoms, or a substituted product thereof having a substituting halogen atom.

14. A transparent substrate comprising an aluminium oxide layer formed on a molded body which is prepared by

curing a composition including:

a compound having at least two unsaturated cycloacetal groups per one molecule; and

a compound having at least two mercapto groups per one melecule.

15. A transparent substrate comprising an aluminium oxide layer formed on a molded body which is prepared by curing a composition including:

a compound having at least two unsaturated cycloacetal groups per one molecule; and

a compound having at least two mercapto groups per one melecule, and further added with a compound having at least two acryloyl and/or methacryloyl groups per one molecule.

16. The transparent substrate according to claim 15, wherein said compound having at least two acryloyl and/or methacryloyl groups per one molecule is selected from the group consisting of bisphenols, compounds having triazine rings and derivatives of isocyanuric acid.

17. A reaction injection molding process comprising the steps of injecting a curable composition into a mold made of a material which transmits a high energy beam, and irradiating said composition with a high energy beam through said mold.

18. The reaction injection molding process according to claim 17, wherein said high energy beam is an ultraviolet

ray.

19. The reaction injection molding process according to claim 17, wherein said mold has a window portion extending from the outside of the mold to the cavity in the mold and made of a material which transmits a high energy beam, and wherein the cavity in said mold is evacuated, followed by injection of the curable composition into said cavity, and then the injected composition is irradiated with a high energy beam through said window portion from the outside of said mold to be cured thereby.

20. The reaction injection molding process according to claim 17 or 19, wherein said curable resin includes:

a compound having at least two unsaturated cycloacetal groups per one molecule;

a compound having at least two mercapto groups per one melecule; and

a compound having at least two reactive unsaturated bonds per one molecule.

21. The reaction injection molding process according to claim 19, wherein a portion of said mold is moved to contract said cavity during the step of irradiating with said high eneregy beam.

1/4

FIG.1

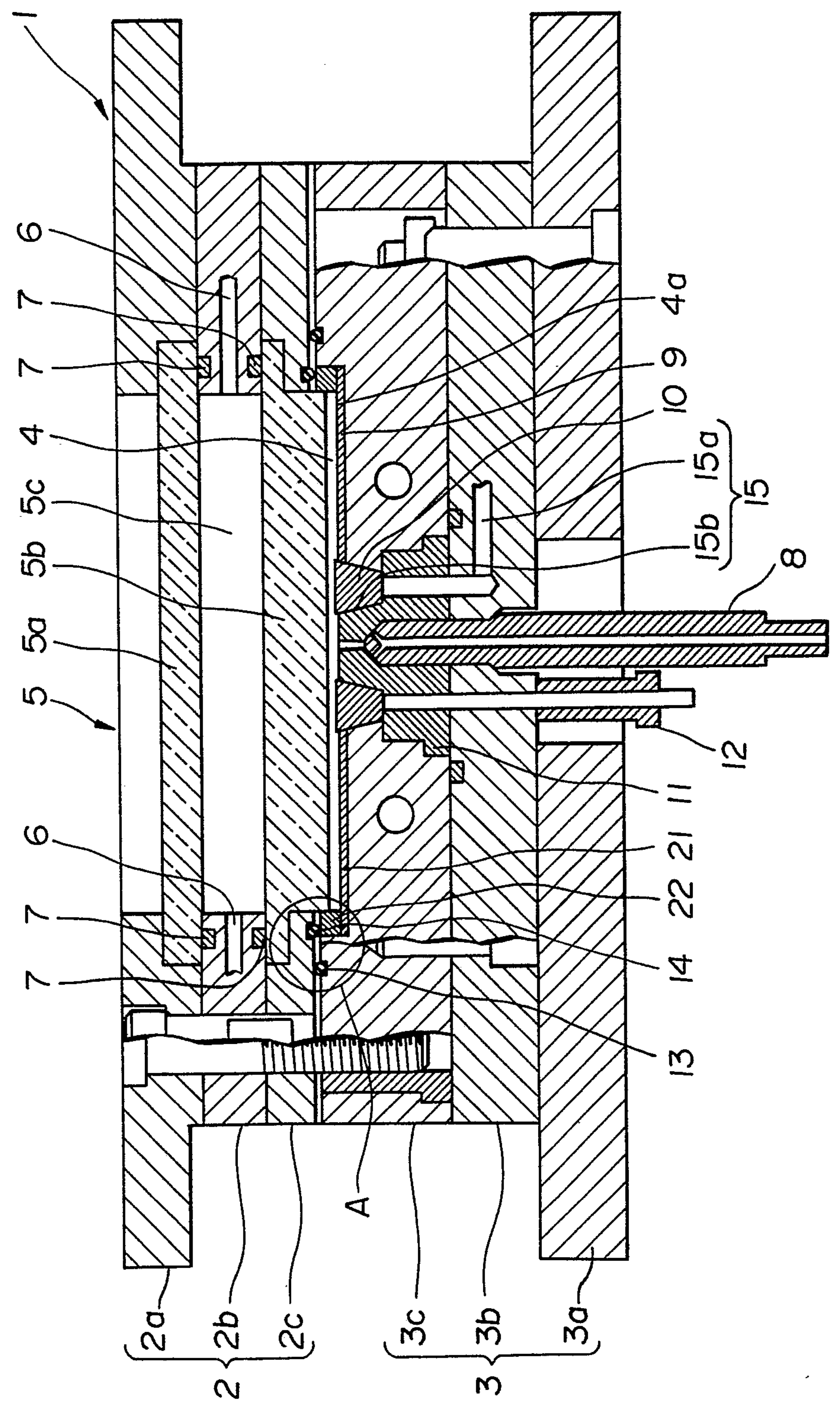
1
6
7
7
4a
9
10
4
5c
5b
5a
5
15a
15b
15
8
12
11
21
22
14
6
7
7
13
A
2a
2b
2c
2
3c
3b
3a
3

FIG. 2

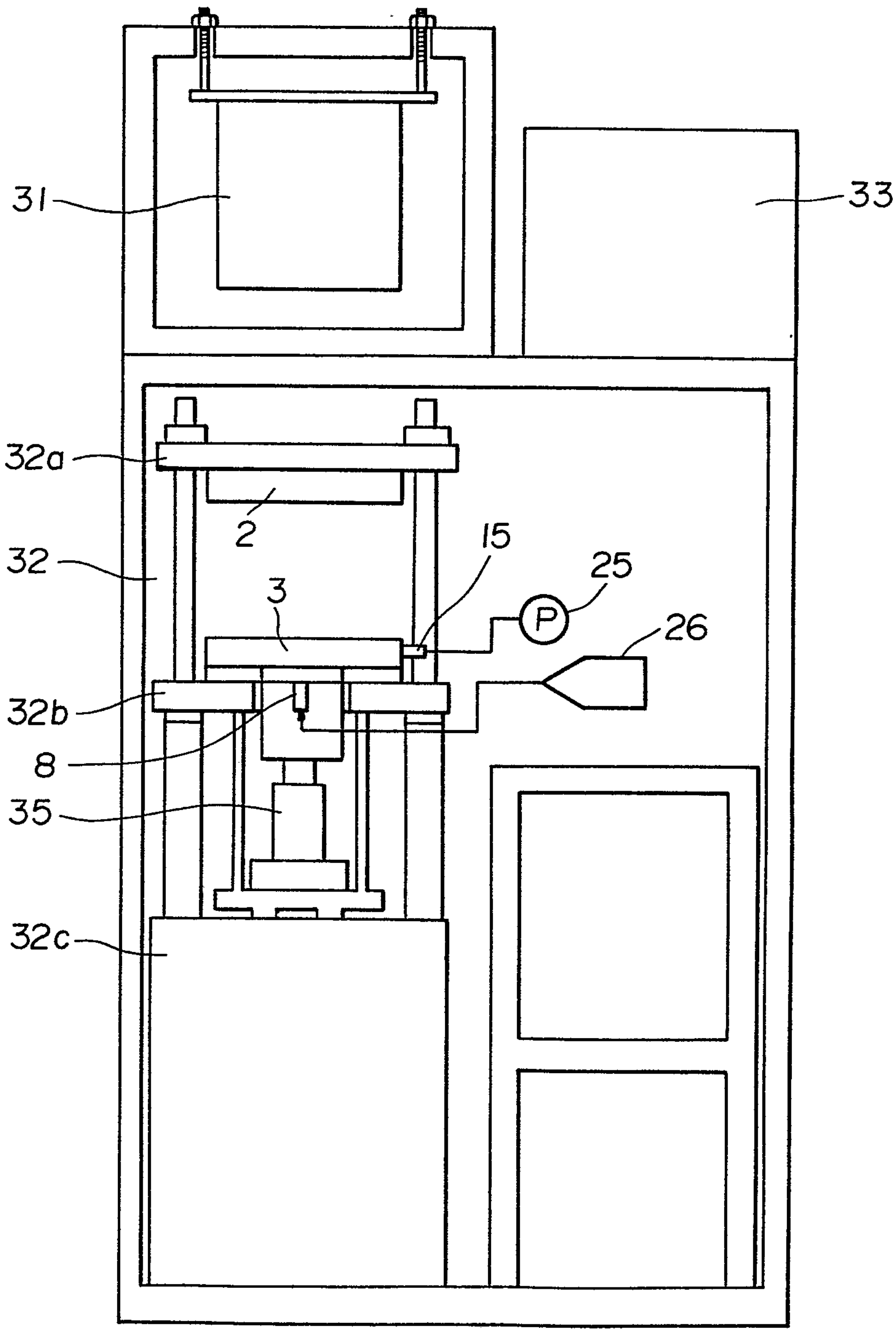

FIG. 3

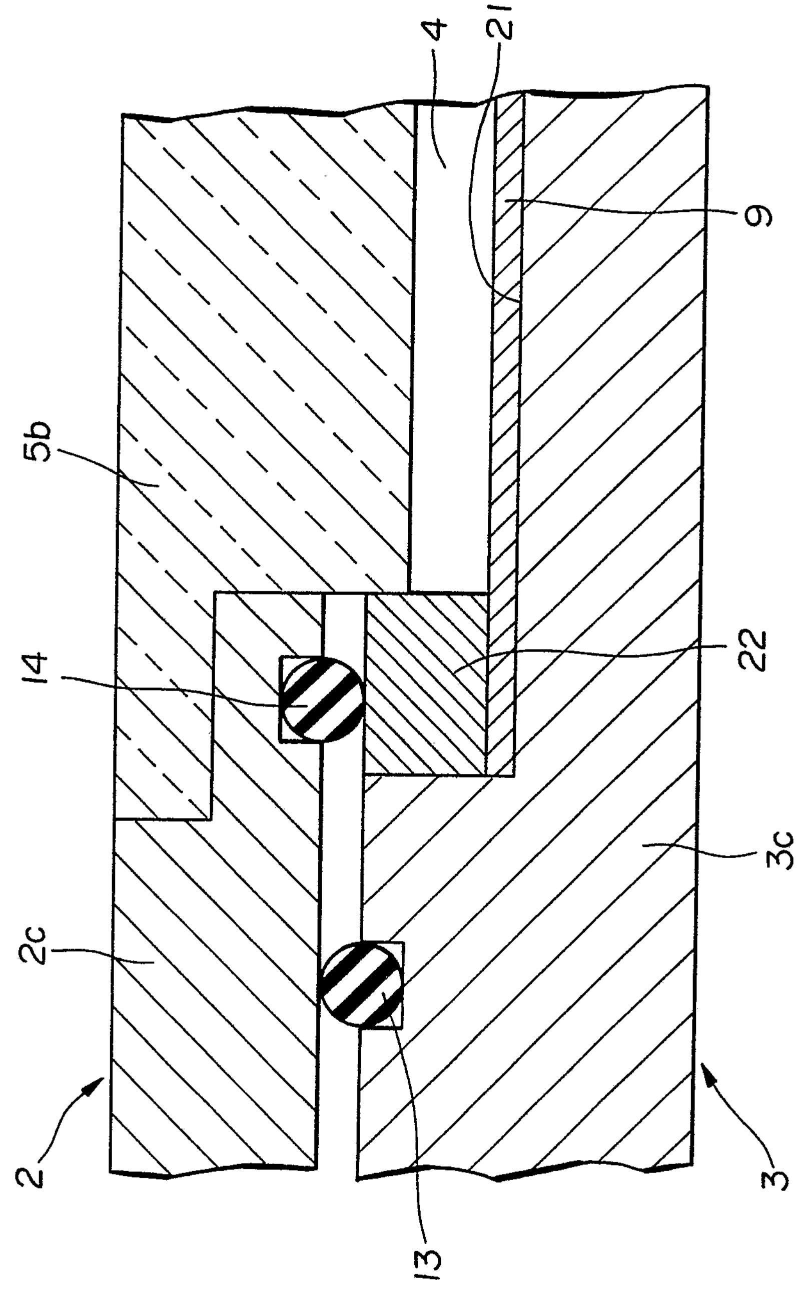

# FIG.4

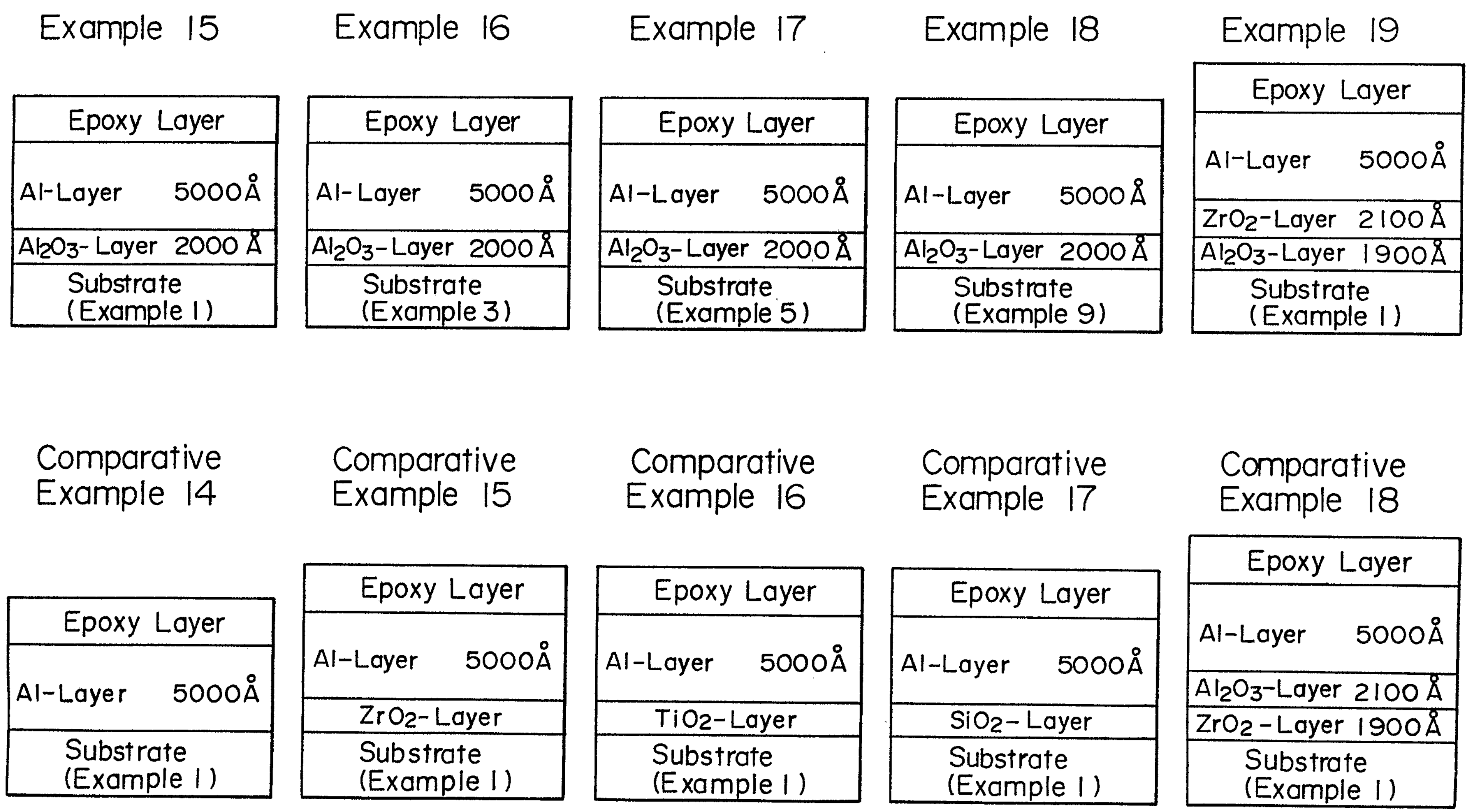
Example 15
Epoxy Layer
Al-Layer 5000Å
$Al_2O_3$-Layer 2000Å
Substrate (Example 1)
Example 16
Epoxy Layer
Al-Layer 5000Å
$Al_2O_3$-Layer 2000Å
Substrate (Example 3)
Example 17
Epoxy Layer
Al-Layer 5000Å
$Al_2O_3$-Layer 2000Å
Substrate (Example 5)
Example 18
Epoxy Layer
Al-Layer 5000Å
$Al_2O_3$-Layer 2000Å
Substrate (Example 9)
Example 19
Epoxy Layer
Al-Layer 5000Å
$ZrO_2$-Layer 2100Å
$Al_2O_3$-Layer 1900Å
Substrate (Example 1)
Comparative Example 14
Epoxy Layer
Al-Layer 5000Å
Substrate (Example 1)
Comparative Example 15
Epoxy Layer
Al-Layer 5000Å
$ZrO_2$-Layer
Substrate (Example 1)
Comparative Example 16
Epoxy Layer
Al-Layer 5000Å
$TiO_2$-Layer
Substrate (Example 1)
Comparative Example 17
Epoxy Layer
Al-Layer 5000Å
$SiO_2$-Layer
Substrate (Example 1)
Comparative Example 18
Epoxy Layer
Al-Layer 5000Å
$Al_2O_3$-Layer 2100Å
$ZrO_2$-Layer 1900Å
Substrate (Example 1)

# INTERNATIONAL SEARCH REPORT

International Application No. PCT/JP86/00225

**I. CLASSIFICATION OF SUBJECT MATTER** (if several classification symbols apply, indicate all) [3]

According to International Patent Classification (IPC) or to both National Classification and IPC

Int.Cl$^4$ C08G75/02, G11B11/00, B29C45/00, B32B27/28

**II. FIELDS SEARCHED**

Minimum Documentation Searched [4]

| Classification System | Classification Symbols |
|---|---|
| IPC | C08G75/02, G11B11/00, B29C45/00, B32B27/28 |

Documentation Searched other than Minimum Documentation to the Extent that such Documents are Included in the Fields Searched [5]

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| X | JP, A, 53-14800 (Showa High Polymer Co., Ltd.) 9 February 1978 (09. 02. 78) & DE, A, 2734076 & FR, A1, 2359869 & US, A, 4119617 | 1 - 13 |
| X | JP, A, 53-42297 (Thiokol Corp.) 17 April 1978 (17. 04. 78) & DE, A1, 2739164 & FR, A1, 2363598 & GB, A, 1547006 & US, A, 4157421 | 1 - 13 |
| X | JP, A, 57-209929 (Nitto Electric Industrial Co., Ltd.) 23 December 1982 (23. 12. 82) (Family: none) | 1 - 13 |
| X | JP, A, 60-195127 (Showa High Polymer Co., Ltd.) 3 October 1985 (03. 10. 85) (Family: none) | 4 - 13 |
| X | JP, A, 59-193924 (Showa Denko Kabushiki Kaisha and one other) 2 November 1984 (02. 11. 84) (Family: none) | 1 - 21 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| July 9, 1986 (09. 07. 86) | July 21, 1986 (21. 07. 86) |
| International Searching Authority [1] | Signature of Authorized Officer [20] |
| Japanese Patent Office | |